# EUROPÄISCHE PATENTSCHRIFT

(11) **EP 0 809 054 B1**
(45) Veröffentlichungstag und Bekanntmachung des Hinweises auf die Patenterteilung: **11.07.2001**
(21) Anmeldenummer: 97104364.1
(22) Anmeldetag: 14.03.1997
(51) Int. Cl.: F16K 3/02, F16J 15/32, F16J 15/12

(54) **Beidseitig wirkender Dichtungsring einer Schieberarmatur**
Double acting sealing ring for gate-valve
Anneau d'étanchéité à double effet pour vanne à opercule coulissant

(30) Priorität: 25.05.1996 DE 19621248
(43) Veröffentlichungstag der Anmeldung: 26.11.1997
(73) Patentinhaber: Bü-Sch-Armaturen GmbH, 90478 Nürnberg (DE)
(72) Erfinder: Schmidt, Horst, 90475 Nürnberg (DE); Günther, Hans-Joachim, 90468 Tannenberg (DE); Roscher, Karl Heinz, 90456 Annaberg (DE)
(74) Vertreter: Böhme, Volker, Dipl.-Ing.

(56) Entgegenhaltungen:
- EP-A- 0 629 801
- DE-B- 1 126 207

## Beschreibung

Die Erfindung betrifft eine Dichtungsanordnung bestehend aus einer Schieberarmatur, einer Wand und einem dazwischen angeordneten beidseitig wirkenden Dichtungsring, der in einem Durchlaßdurchbruch einer Wandplatte angeordnet ist, die an einer eine Auslaßöffnung aufweisenden Wand befestigt ist, der mit einer Seite der Wand und mit der anderen Seite einer Schieberplatte zugeordnet ist und einen radial vorspringenden Sims aufweist, der an der der Wand abgewendeten Seite von Haltestücken überfaßt ist, die an der Wandplatte befestigt sind, der einen biegungssteifen Ringträger und beiderseits nur je einen Dichtwulst mit gebogener Außenfläche aufweist, wobei von den beiden Dichtwülsten der eine von einem härteren Material und der andere von einem weicheren Material gebildet ist, und der den der Wand zugeordneten Dichtwulst zur Anlage an einen die Auslaßöffnung umgebenden Wandrandstreifen aufweist.

Bei einer bekannten (DE 43 20 185 A1) Dichtungsanordnung dieser Art ist der Ringträger freiliegend ausgebildet und an beiden Seiten mit einer Nut versehen, in die eine im Querschnitt runde Ringdichtung gelegt ist, die mit einem herausragenden Bereich den Dichtwulst bildet. Der Sims für die Haltestücke ist von dem metallenen Ringträger gebildet. Die beiden Dichtwülste sind in radialer Richtung gegeneinander versetzt angeordnet. Der Dichtungsring ist zwischen der Wand und den Haltestücken relativ lose gehalten. Der freiliegende Ringträger besteht aus normalen Stahl. Die Schieberarmatur wird nicht in Verbindung mit Trinkwasser, sondern in Verbindung mit Schmutzwasser eingesetzt, das an dem normalen Stahl beachtlich korrodierend angreift. Der korrodierende Angriff läßt sich vermeiden, wenn der Ringträger aus korrosionsfestem Sonderstahl gefertigt ist oder mit einer Kunststoffbeschichtung überzogen wird, auf der die Ringdichtungen aufliegen. Diese beiden Maßnahmen vergrößern den Aufwand bei der Herstellung des Dichtungsrings beachtlich.

Es ist auch ein Dichtungsring bekannt (EP 0 505 693 A1), bei dem ein metallener Ring als Kern in einer ummantelnden Gummimasse ausgebildet ist, welche zwei beiderseitig vorgesehene Dichtwülste bildet, die einander bzgl. des Ring-Kerns gegenüber angeordnet sind, wobei die ummantelnde Gummimasse zur einen Seite hin insgesamt von dem Material des einen Dichtwulstes und zur anderen Seite hin insgesamt von dem Material des anderen Dichtwulstes gebildet ist. Hier ist der Ring-Kern mit relativ wenig Aufwand gegen Korrosion gesichert. Jedoch läßt sich dieser Dichtungsring nicht bei der Schieberarmatur der eingangs genannten Art einsetzen und zwar nicht nur deswegen, weil der metallene Ring nur als Verstärkung ausgebildet ist und weil beiderseits je zwei Dichtwülste vorgesehen sind. Vielmehr sind die beiderseits vorgesehenen Dichtwülste von dem gleichen Material gebildet und ist ein Sims für die Haltestücke der Wandplatte nicht vorhanden.

Bei einem weiteren bekannten (DE 1 126 207 B) Dichtungsring einer Schieberarmatur ist ein Ringträger mit einem Bereich in eine Gummimasse eingebettet, welche zwei Dichtwülste bildet, wobei die einbettende Gummimasse zur einen Seite hin insgesamt von dem Material des einen Dichtwulstes und zur anderen Seite hin insgesamt von dem Material des anderen Dichtwulstes gebildet ist; ein wandungsseitiges Gummimasse-Teil aus dem weicheren Material und ein schieberplattenseitiges Gummimasse-Teil aus dem härteren Material bilden eine in Umfangsrichtung verlaufende Kontaktfläche. Bei diesem Dichtungsring ragt der Ringträger aus der Gummimasse heraus und bildet so den radial vorspringenden Sims, der an der Wandung eines Rohres lose anliegt; die beiden Dichtwülste sind gegeneinander in radialer Richtung versetzt.

Eine Aufgabe der Erfindung ist es daher, eine Dichtungsanordnung der eingangs genannten Art zu schaffen, deren Dichtungsring mit einer korrosionshemmenden Ummantelung unter Berücksichtigung seiner durch die Schieberarmatur bedingten Funktionen mit wenig Aufwand versehen ist. Die erfindungsgemäße Dichtungsanordnung ist, diese Aufgabe lösend, dadurch gekennzeichnet, daß der biegungssteife Ringträger als Kern in einer vollständig ummantelnden Gummimasse ausgebildet ist, welche die beiden Dichtwülste bildet, die einander bzgl. des Ringträger-Kerns gegenüber angeordnet sind, wobei die ummantelnde Gummimasse zu einer Seite hin insgesamt von dem Material des einen Dichtwulstes und zur anderen Seite hin insgesamt von dem Material des anderen Dichtwulstes gebildet ist, und daß das wandseitige Gummimasse-Teil aus dem weicheren Material und das schieberplatteseitige Gummimasse-Teil aus dem härteren Material eine in Umfangsrichtung verlaufende Kontaktfläche bilden und die Gummimasse mit dem härteren Material den Sims für die Haltestücke bildet.

Bei der erfindungsgemäßen Dichtungsanordnung ist der wegen Wandunebenheiten biegungssteife Ringträger in der ummantelnden Gummimasse korrosionssicher vorgesehen. Hierzu sind das Ummantelungsteil aus dem weicheren Material und das Ummantelungsteil aus dem härteren Material zusammengesetzt. Der Sims, an dem die Haltestücke der Wandplatte angreifen, ist aus dem härteren Material gebildet. Es sind die durch die Schieberarmatur bedingten Funktionen des Dichtungsrings unter nur geringem zusätzlichen Aufwand vermieden.

Das Schmutzwasser, für das die hier zur Rede stehende Schieberarmatur vorgesehen ist, hinterläßt Ablagerungen. Diese Ablagerungen bilden sich auch zwischen dem Wandrandstreifen und dem Dichtungsring, wenn dieser gegenüber der Wand relativ lose ist, und verhindern eine gute Abdichtung des Dichtungsrings gegen die Wand. Besonders zweckmäßig und vorteilhaft ist es daher, wenn der Dichtungsring mittels der Haltestücke dauernd unter Vorspannung gegen den Wandrandstreifen gedrückt ist. Dies ist eine weitere Anpassung des Dichtungsrings an die Schmutzwasserverhältnisse der hier zur Rede stehenden Schieberarmatur, die wegen der Gummimasse-Ummantelung und der dadurch machbaren Querschnittsgestaltung des wandseitigen Dichtwulstes ermöglicht ist.

Besonders zweckmäßig und vorteilhaft ist es nämlich, wenn der Dichtwulst - im Querschnitt gesehen - bei seinem Beginn eine Breite aufweist, die größer ist als die doppelte, zu dieser Breite rechtwinklige Höhe. Ein derart gestalteter Dichtwulst nimmt als einziger Dichtwulst auf jeder Seite die im Dichtungsfall auftretenden Verformungskräfte besonders günstig auf und nimmt wandseitig eine dauernde Vorspannung vorteilhaft auf.

Besonders zweckmäßig und vorteilhaft ist es ebenso, wenn ein sich zwischen dem schieberplattenseitigen Dichtwulst und dem Ringträger befindlicher Gummimassebereich - im Querschnitt gesehen - höher ist als ein sich zwischen dem wandseitigen Dichtwulst und dem Ringträger befindlicher Gummimassebereich. Diese Gestaltung ist an die verschiedenen Anforderungen, die an die beiden Dichtwülste gestellt werden, angepaßt und berücksichtigt die Vorspannung des wandseitigen Dichtwulstes.

Die beiden Dichtwülste liegen einander in der Regel genau gegenüber, können aber auch gegeneinander etwas seitlich verschoben sein, wenn sie sich nur ausreichend weit überlappen. Die Dichtwülste und die Gummimasse sind elastisch zusammendrückbar. Die Härte bzw. Weiche der Materialien wird als Shorehärte angegeben. Das der Wand zugeordnete Material weist in der Regel eine Shorehärte 30 - 40 auf und das der Schieberplatte zugeordnete Material weist in der Regel eine Shorehärte 50 - 60 auf.

Eine besonders zweckmäßige und vorteilhafte Ausführungsform der Erfindung liegt vor, wenn die beiden Dichtwülste dem Ringträger-Kern so zugeordnet sind, daß sie den Ringträger-Kern mit mehr als der Hälfte ihrer bei ihrem Beginn vorhandenen Breite überragen. Dies verbessert die Dichtwirkung der Dichtwülste. Es ist jedenfalls der Scheitel der Dichtwülste, d.h. die Linie der maximalen Höhe gegen den Ringträger-Kern abgestützt.

Die Biegungssteifigkeit des Ringträger-Kerns unter dem dichtenden Schließdruck der Schieberplatte ist wichtig für ein zuverlässiges Arbeiten der hier zur Rede stehenden Schieberarmatur mit dem erfindungsgemäßen Dichtungsring. Der Ringträger-Kern muß trotz Unebenheiten der Wand ein mit seiner Mittelebene völlig planebenes Gebilde bleiben. Diese Biegungssteifigkeit läßt sich leichter erreichen, wenn der Ringträger-Kern - im Querschnitt gesehen - in Richtung seiner Mittelebene größer ist als rechtwinklig dazu.

Besonders zweckmäßig und vorteilhaft ist es sodann, wenn die Haltestücke den Ringträger übergreifen. Die Haltestücke wirken also nicht nur auf Gummimasse ein, sondern auch auf den Kern. Dies ist im Falle der Vorspannung besonders wesentlich.

Besonders zweckmäßig und vorteilhaft ist es, wenn der wandseitige Dichtungswulst bzgl. des Dichtungsrings an der radial innenliegenden Randkante der Gummimasse beginnt. Es ist also ein Spalt zwischen der Wand und wulstfreier Gummimasse vermieden, in welchem sich Schmutzteilchen des zu verarbeitenden Schmutzwassers ablagern können.

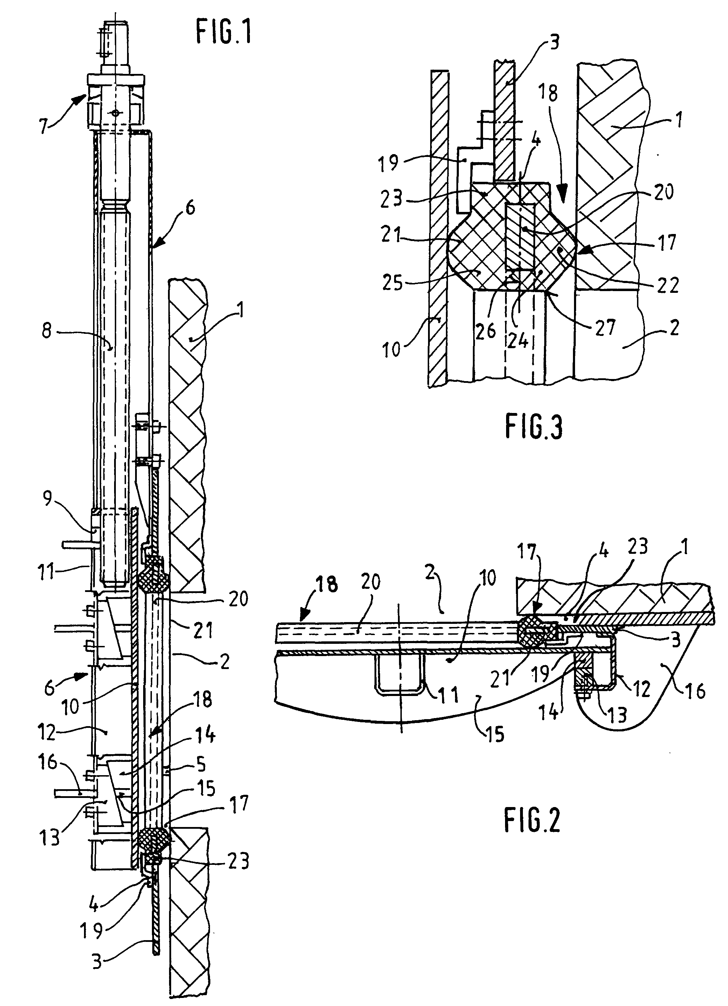

In der Zeichnung ist eine bevorzugte Ausführungsform der Erfindung dargestellt und zeigt
- Fig. 1: einen Längsschnitt einer Dichtungsanordnung mit Schieberarmatur mit einem beidseitig wirkenden Dichtungsring,
- Fig. 2: einen Querschnitt der Dichtungsanordnung gemäß Fig. 1 und
- Fig. 3: eine Einzelheit der Fig. 1 in einem gegenüber Fig. 1 vergrößerten Maßstab.

Die Schieberarmatur gemäß Zeichnung ist für eine Wand 1 bestimmt und an der Wand 1 angebracht, in der eine Auslaßöffnung 2 eines nicht näher gezeigten Kanals vorgesehen ist. Die Schieberarmatur weist einen Gestellrahmen 6 auf, der eine Wandplatte 3 umfaßt, die im Bereich der Auslaßöffnung 2 vorgesehen ist und mit einem Durchlaßdurchbruch 4 versehen ist, der koaxial mit der Auslaßöffnung angeordnet ist. Die Wandplatte 3 ist an ihren beiden Längsseiten mit je zwei seitlich wegragenden Befestigungsstücken 5 versehen, die in Richtung zur Wand 1 vorspringen, an dieser anliegen und an dieser angeschraubt sind. Auf diese Weise besitzt die Wandplatte 3 rund um die Auslaßöffnung 2 und abgesehen von den Befestigungsstücken 5 Abstand von der Wand 1. Der Gestellrahmen 6 trägt oben eine Stelleinrichtung 7, zu der eine abwärts ragende Spindel 8 gehört, deren unteres Ende durch einen Gewindeblock 9 ragt, der an einer Schieberplatte 10 angebracht ist. Bei Drehung der Spindel 8 wandern der Gewindeblock und die Schiebeplatte auf oder ab. Im Bereich der Schieberplatte 10 ist an dieser ein Kanal 11 vorgesehen, der die Spindel 8 aufnimmt, wenn sich die Schieberplatte in eine Offenstellung nach oben bewegt.

Die Schieberplatte 10 ist an den beiden Längsseiten von je einer Rahmenstrebe 12 des Gestellrahmens 6 geführt, an welchem Keilgebilde 13 angebracht sind, die mit Keilgebilden 14 zusammenwirken, die an der Schieberplatte 10 angebracht sind. Wenn die Schieberplatte 10 in die in der Zeichnung gezeigte Schließstellung gelangt, dann treffen die beiden einander jeweils zugeordneten Keilgebilde 13, 14 aufeinander und die Schieberplatte 10 wird in Richtung zur Wand 1 gedrückt. Es sind vier Paare von Keilgebilden 13, 14 vorgesehen, von denen jedes einem der Befestigungstücke 5 zugeordnet ist. Die Keilgebilde sind jeweils kurze Keilstücke. Die Schieberplatte 10 und die Wandplatte 3 sind an der der Wand 1 abgewendeten Seite mit Verstärkungsrippen 15, 16 versehen. Es trägt die Schieberplatte 10 drei Verstärkungsrippen 15, die sich quer zur Spindel 8 über die gesamte Schieberplatte erstrecken. Weiterhin sind vier Verstärkungsrippen 16 vorgesehen, von denen sich jede auf eines der seitlich wegragenden Befestigungsstücke 5 und einen daran anschließenden Bereich der Wandplatte 3 erstreckt. Zwei der Verstärkungsrippen 15 durchdringen jeweils endseits eines der Keilgebilde 14 der Schieberplatte 10. Jede Verstärkungsrippe 16 erstreckt sich von dem Befestigungsstück 5 auf die,benachbarte Rahmenstrebe 12 des Stellrahmens 6.

Der Durchlaßdurchbruch 4 der Wandplatte 3 ist im Durchmesser größer als die Auslaßöffnung 2 der Wand 1 und die Auslaßöffnung ist zur Schieberarmatur hin von einem Wandrandstreifen 17 umgeben. Parallel zu diesem kreisförmig in sich geschlossenen Wandrandstreifen 17 ist ein Dichtungsring 18 vorgesehen, der sich in dem Durchlaßdurchbruch 4 befindet. Ein radial vorspringender Sims 23 des Dichtungsrings 18 ist von einem Haltestück 19 überfaßt, das an die Wandplatte 3 geschraubt ist, wodurch eine leichte Montage bei Querbeweglichkeit des Dichtungsrings gegeben ist. Der Dichtungsring 18 umfaßt einen metallenen Ringträger 20, der von Gummimasse ummantelt ist, die zur Wand 1 und zur Schieberplatte 10 hin je einen Dichtwulst 21, 22 bildet. Der Dichtwulst 22 gehört zu einem Gummimasse-Teil 24 aus weicherem Material und der Dichtwulst 21 gehört zu einem Gummimasse-Teil 25 aus härterem Material. Die beiden Gummimasse-Teile 24, 25 gehen an einer Kontaktfläche 26 ineinander über, die parallel zur Mittelebene des Dichtungsrings verläuft und etwa in der Mittelebene des Ringträgers 20 liegt. Der wandseitige Dichtwulst beginnt bei seiner Fußbreite an der innenliegenden Randkante 27 des Gummimasse-Teils 24.

## Patentansprüche

1. Dichtungsanordnung bestehend aus einer Schieberarmatur, einer Wand (1) und einem dazwischen angeordneten beidseitig wirkenden Dichtungsring (18),
der in einem Durchlaßdurchbruch (4) einer Wandplatte (3) angeordnet ist, die an der eine Auslaßöffnung (2) aufweisenden Wand (1) befestigt ist,
der mit einer Seite der Wand (1) und mit der anderen Seite einer Schieberplatte (10) zugeordnet ist und einen radial vorspringenden Sims (23) aufweist, der an der der Wand (1) abgewendeten Seite von Haltestücken (19) überfaßt ist, die an der Wandplatte (3) befestigt sind,
der einen biegungssteifen Ringträger (20) und beiderseits nur je einen Dichtwulst (21, 22) mit gebogener Außenfläche aufweist, wobei von beiden Dichtwülsten der eine (21) von einem härteren Material und der andere (22) von einem weicheren Material gebildet ist, und
der den der Wand (1) zugeordneten Dichtwulst (22) zur Anlage an einen die Auslaßöffnung (2) umgebenden Wandrandstreifen (17) aufweist,
dadurch gekennzeichnet,
daß der biegungssteife Ringträger (20) als Kern in einer vollständig ummantelnden Gummimasse (24, 25) ausgebildet ist, welche die beiden Dichtwülste (21, 22) bildet, die einander bzgl. des Ringträger-Kerns gegenüber angeordnet sind, wobei die ummantelnde Gummimasse zur einen Seite hin insgesamt von dem Material (25) des einen Dichtwulstes (21) und zur anderen Seite hin insgesamt von dem Material (24) des anderen Dichtwulstes (22) gebildet ist, und
daß das wandseitige Gummimasse-Teil (24) aus dem weicheren Material und das schieberplattenseitige Gummimasse-Teil (25) aus dem härteren Material eine in Umfangsrichtung verlaufende Kontaktfläche (26) bilden und die Gummimasse (25) mit dem härteren Material den Sims (23) für die Haltestücke (19) bildet.

2. Dichtungsanordnung nach Anspruch 1, dadurch gekennzeichnet, daß der Dichtungsring mittels der Haltestücke (19) dauernd unter Vorspannung gegen den Wandrandstreifen (17) gedrückt ist.

3. Dichtungsanordnung nach Anspruch 1 oder 2, dadurch gekennzeichnet, daß der Dichtwulst (21, 22) - im Querschnitt gesehen - bei seinem Beginn eine Breite aufweist, die größer ist als die doppelte, zu dieser Breite rechtwinkelige Höhe.

4. Dichtungsanordnung nach Anspruch 1, 2 oder 3, dadurch gekennzeichnet, daß ein zwischen dem schieberplattenseitigen Dichtwulst (21) und dem Ringträger (20) befindlicher Gummimassebereich - im Querschnitt gesehen - höher ist als ein zwischen dem wandseitigen Dichtwulst (22) und dem Ringträger (20) befindlicher Gummimassebereich.

5. Dichtungsanordnung nach einem der vorhergehenden Ansprüche, dadurch gekennzeichnet, daß die beiden Dichtwülste (21, 22) dem Ringträger-Kern (20) so zugeordnet sind, daß sie den Ringträger-Kern mit mehr als der Hälfte ihrer bei ihrem Beginn vorhandenen Breite überragen.

6. Dichtungsanordnung nach einem der vorhergehenden Ansprüche, dadurch gekennzeichnet, daß der Ringträger-Kern (20) - im Querschnitt gesehen - in Richtung seiner Mittelebene größer ist als rechtwinkelig dazu.

7. Dichtungsanordnung nach einem der vorhergehenden Ansprüche, dadurch gekennzeichnet, daß die Haltestücke (19) den Ringträger (20) übergreifen.

8. Dichtungsanordnung nach einem der vorhergehenden Ansprüche, dadurch gekennzeichnet, daß der wandseitige Dichtwulst (22) bzgl. des Dichtungsrings an der radial innenliegenden Randkante (27) der Gummimasse (24) beginnt.

## Claims

1. A sealing arrangement comprising a slide valve, a wall (1) and a double-acting sealing ring (18) arranged therebetween,
the sealing ring (18) being arranged in a through hole (4) in a wall plate (3) fixed to the wall (1) provided with an outlet opening (2),
being associated on one side with the wall (1) and on the other side with a slide plate (10) and having a radially projecting moulding (23) held on the side remote from the wall (1) by retaining members (19) fixed to the wall plate (3),
having a rigid ring-carrier (20) and, on either side, a respective sealing bead (21, 22) with a curved outer surface, one (21) of the two sealing beads comprising a harder material and the other (22) comprising a softer material, and
wherein the sealing bead (22) associated with the wall (1) is intended to rest against a wall edge strip (17) surrounding the outlet opening (2),
characterised in that
the rigid ring-carrier (20) is formed as a core in a completely encasing rubber compound (24, 25) forming the two sealing beads (21, 22) arranged opposite one another in relation to the ring-carrier core, the encasing rubber compound being formed entirely of the material (25) of the one sealing bead (21) towards one side and entirely of the material (24) of the other sealing bead (22) towards the other side,
and in that the rubber-compound portion (24) comprising the softer material on the wall side and the rubber-compound portion (25) comprising the harder material on the slide-plate side form a contact surface (26) extending circumferentially, and the rubber compound (25) comprising the harder material forms the moulding (23) for the retaining members (19).

2. A sealing arrangement according to claim 1, characterised in that the sealing ring is pressed against the wall edge strip (17) under permanent prestress by means of the retaining members (19).

3. A sealing arrangement according to claim 1 or 2, characterised in that the sealing bead (21, 22) - seen in cross-section - has a width at its start which is greater than twice the height at right angles to this width.

4. A sealing arrangement according to claim 1, 2 or 3, characterised in that a rubber-compound region between the sealing bead (21) on the slide-plate side and the ring-carrier (20) - seen in cross-section - is higher than a rubber-compound region between the sealing bead (22) on the wall side and the ring-carrier (20).

5. A sealing arrangement according to any one of the preceding claims, characterised in that the two sealing beads (21, 22) are associated with the ring-carrier core (20) in such a manner that they project therebeyond with more than half their width available at the start.

6. A sealing arrangement according to any one of the preceding claims, characterised in that the ring-carrier core (20) - seen in cross-section - is larger in the direction of its central plane than at right angles thereto.

7. A sealing arrangement according to any one of the preceding claims, characterised in that the retaining members (19) overlap the ring-carrier (20).

8. A sealing arrangement according to any one of the preceding claims, characterised in that the sealing bead (22) on the wall side starts at the radially inner lateral edge (27) of the rubber compound (24) in relation to the sealing ring.

## Revendications

1. Agencement d'étanchement constitué par un opercule coulissant, par une paroi (1) et par une bague d'étanchement (18) agencée entre ces derniers et agissant sur les deux côtés,
ladite bague étant agencée dans une traversée de passage (4) d'une plaque de paroi (3) qui est fixée contre la paroi (1) présentant une ouverture de sortie (2),
ladite bague étant associée par un côté à la paroi (1) et par l'autre côté à une plaque coulissante (10) et comporte une moulure (23) en saillie radiale, ladite moulure étant coiffée du côté détourné de la paroi (1) par des pièces de maintien (19) qui sont fixées sur la plaque de paroi (3),
ladite bague comportant un porte-bague (20) rigide vis-à-vis de la flexion, et un seul bourrelet d'étanchement (21, 22) des deux côtés respectifs, avec une surface extérieure incurvée, de sorte que parmi les deux bourrelets d'étanchement, l'un (21) est constitué en un matériau plus dur et l'autre (22) est constitué en un matériau plus souple, et
ladite bague comportant le bourrelet d'étanchement (22) associé à la paroi (1) et destiné à venir en contact avec un ruban de bordure (17) qui entoure l'ouverture de sortie (2),
caractérisé en ce que
le porte-bague (20) rigide vis-à-vis de la flexion est réalisé sous la forme d'un noyau dans une masse de caoutchouc (24, 25) qui l'entoure totalement et qui forme les deux bourrelets d'étanchement (21, 22), ces derniers étant agencés en opposition mutuelle par rapport au noyau du porte-bague, et la masse de caoutchouc qui l'entoure étant constituée d'un côté au total par le matériau (25) de l'un des bourrelets d'étanchement (21) et de l'autre côté au total par le matériau (24) de l'autre bourrelet d'étanchement (22), et
la partie de la masse de caoutchouc (24) - du côté de la paroi - constituée du matériau plus souple, et la partie de masse de la masse de caoutchouc (25) - du côté de la plaque coulissante - constituée du matériau plus dur, forment une surface de contact (26) qui s'étend en direction périphérique, et la masse de caoutchouc (25) avec le matériau plus dur forme la moulure (23) pour les pièces de maintien (19).

2. Agencement d'étanchement selon la revendication 1, caractérisé en ce que la bague d'étanchement est appuyée au moyen des pièces de maintien (19) en permanence sous précontrainte contre le ruban de bordure (17).

3. Agencement d'étanchement selon l'une ou l'autre des revendications 1 et 2, caractérisé en ce que le bourrelet d'étanchement (21, 22), vu en section transversale, présente à son commencement une largeur qui est supérieure au double de sa hauteur, perpendiculaire à cette largeur.

4. Agencement d'étanchement selon l'une des revendications 1, 2 ou 3, caractérisé en ce qu'une région de la masse de caoutchouc, qui se trouve entre le bourrelet d'étanchement (21) du côté de l'opercule coulissant et le porte-bague (20), vue en section transversale, est plus haute qu'une région de la masse de caoutchouc qui se trouve entre le bourrelet d'étanchement (22) du côté de la paroi et le porte-bague (20).

5. Agencement d'étanchement selon l'une des revendications précédentes, caractérisé en ce que les deux bourrelets d'étanchement (21, 22) sont ainsi associés au noyau du porte-bague (20) qu'ils dépassent au-delà du noyau du porte-bague sur une distance supérieure à la moitié de la largeur présente à leur commencement.

6. Agencement d'étanchement selon l'une des revendications précédentes, caractérisé en ce que le noyau du porte-bague (20), vu en section transversale, est plus grand en direction de son plan médian que dans une direction perpendiculaire à celle-ci.

7. Agencement d'étanchement selon l'une des revendications précédentes, caractérisé en ce que les pièces de maintien (19) coiffent le porte-bague (20).

8. Agencement d'étanchement selon l'une des revendications précédentes, caractérisé en ce que le bourrelet d'étanchement (22) du côté de la paroi commence, par rapport à la bague d'étanchement, au niveau de l'arête de bordure radiale intérieure (27) de la masse de caoutchouc (24).
